# EUROPÄISCHE PATENTANMELDUNG

(11) **EP 3 076 220 A1**
(43) Veröffentlichungstag der Anmeldung: **05.10.2016**
(21) Anmeldenummer: 16000426.3
(22) Anmeldetag: 22.02.2016
(51) Int. Cl.: G02B 23/06

(54) **VERFAHREN UND VORRICHTUNGEN ZUM ERSATZ VON OPTISCHEN LINSEN UND SPIEGELN DURCH PIXEL-DIGITALTECHNIK**

(30) Priorität: 24.02.2015 DE 102015002301
(71) Anmelder: Biener, Hans, Prof. Dr., D-81479 München (DE)
(72) Erfinder: Biener, Hans, D-81479 München (DE)
(74) Vertreter: Koelle, Alexander

(57) **Zusammenfassung**

Die Anmeldung betrifft ein Verfahren sowie Vorrichtungen zum Ersatz von optischen Linsen und Spiegeln durch Pixel-Digitaltechnik.

Die geschliffene Oberfläche von Linsen oder Spiegeln wird dabei durch eine flächige Anordnung von Pixeln ersetzt. Durch elektrische oder (Glasfaser-) Lichtleitungen wird das einfallende Licht dem Detektor zugeführt. Eine besonders wichtige Ausführung der Erfindung erlaubt dabei eine Anordnung der Pixel dergestalt, daß trotz einer ebenen Fläche die optische Wirkung eines Hohlspiegels erreicht wird, wenn die Licht- oder Stromleitungen alle auf gleiche Länge gebracht werden. Statt Pixel können erfindungsgemäß auch andere optisch oder elektrisch empfindliche Sensoren eingesetzt werden.

## Beschreibung

Die vorliegende Anmeldung betrifft Verfahren und Vorrichtungen zum Ersatz von optischen Linsen und Spiegeln durch Pixel-Digitattechnik.

Die STED-Nanoskopie hat gezeigt, daß ein Jahrhundert lang geglaubte physikalische Grenzen in der Lichttechnologie durch den Einsatz neuer Entwicklungen - hier mit Laser und geeigneten Färbemethoden - nicht mehr gültig seh müssen und umgangen werden können. Mit der nachfolgend beschriebenen Erfindung wird unter Verwendung der vor allem in der modernen Photographie und bei Fernsehen eingesetzten Pixel-Technik und der besonders in der Astronomie üblichen Hohlspiegel-Optik ein ganz neuer Weg zu optischen Geräten eröffnet, unter anderem auch für den Bau neuartiger Teleskope.

Der Bau von Linsenfemrohren wird durch die Eigenschaften des Weckstoffs Glas beschränkt Solche astronomischen wie terrestrischen Geräte sind bis zu einem Objektivdurchmesser von etwa 1 Meter einsetzbar. Darüber hinaus liefern sie durch Bewegungen der Glasoberfläche, die konstruktiv nicht verhinderbar sind, keine brauchbar scharfen Bilder mehr. Sehr Viel weiter reicht die Bauweise von astronomischen Hohlspiegeln, da hier die Glasschicht durch Träger-Konstruktionen unterstützt und gehalten wird, die außerdem computergesteuert Verzerrungen zumindest teilweise ausgleichen kennen. Hier liegt die technische Grenze bei Spiegeln von etwa 10 Metern Durchmesser als Einzelstück. Noch größere Dimensionen erreicht man nur durch das Zusammensetzen von Einzelspiegeln, wie sie die ESO in Garching bei München zur Zeit mit einem Projekt von knapp 40 Metern plant und bis 2022 realisieren will, sofern die gewaltigen Kosten planmäßig gedeckt werden können.

Die vorliegende Erfindung geht von den Entwicklungen der Digitalphotographie und Fernsehtechnik aus, die sich z.B. in Digital-Photoapparaten und Handy-Kameras mit Millionen von Pixels bereits zu großer Präzision entwickelt hat. Der erfindungsgemäße Grundgedanke ist, z.B. zur Anwendung bei terrestischen oder auch astronomischen Beobachtungen, diese Technik mit der Spiegel- bzw. Linsentechnik zu verbinden.

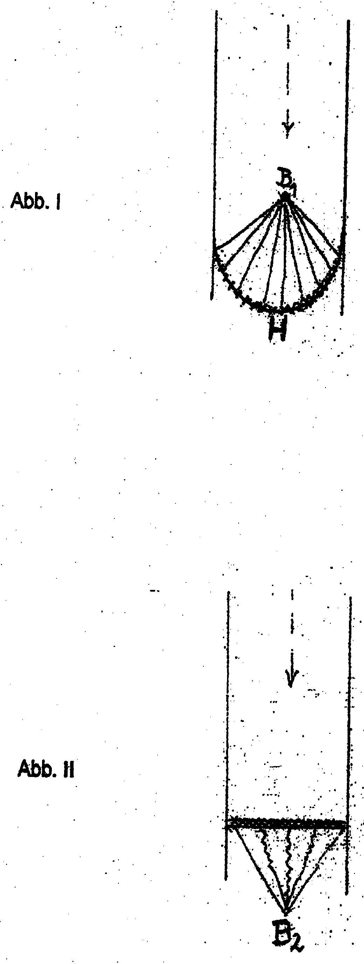

Die Grundlage des erfindungsgemäßen Verfahrens besteht darin, die geschliffene Glasoberfläche durch eine flächige Anordnung von Pixeln zu ersetzen. In vereinfachter Form ausgedrückt erzeugt das einfallende Licht in ihnen elektrische Ladungen, die einem Detektor D zugeführt werden, welcher dem Auge des Beteachters oder einer Kamera entspricht. Im Detektor kann die Ladung bzw. der entstandene Stomstoß wieder in optische Lichtpunkte umgewandelt werden, wobei die Länge der Stromleitungen bzw. Lichtleitungen die Optik ersetzt. Der zunächst verblüffende Grundgedanke wird schematisch durch die Abbildung I dargesteilt, wobei die Pixel auf der Oberfläche eines dem astronomischen entsprechenden Hohispiegelträgers H untergebracht sind und die Leitungen im Beobachtungspunkt B₁ zusammengeführt sind, wo die z.B. in Lichtblitze umgewandelten Stromstöße das optische Beobachtungsblid ergeben.

Um die Störungen durch die Leitungen im Gesichtsfeld des Beobachters bzw. der Kamera zu vermeiden, wird erfindungsgemäß eine andere Anordnung gewählt, die in der Abbildung II beschrieben ist

Hier sind die Pixel auf einer ebenen Fläche angeordnet Das einfallende Licht des zu beobachtenden Objekts erzeugt in den Pixeln Stromstöße, die durch Leitungen zu dem in dieser Ausführung darunter liegenden Beobachtungspunkt B2 geleitet und dort z.B. in Licht umgewandelt werden (natürlich ist auch eine Leitung durch Glasfasern oder dergleichen möglich). Diese Leitungen müssen nun aber, um ein optisches Bild zu ergeben, alle gleich lang sein, damit die Signale genau gleichzeitig beim Detektor Eintreffen, von den Rändern der ebenen Fläche bis hin zu ihrem Mittelpunkt; denn dann ist das optische Ergebnis das gleiche wie in Abbildung I.

Man kann sich dieses zunächst überraschende Ergebnis klarmachen, wenn man sich vorstellt, daß ein optischer astronomischer Hohlspiegel aufgebogen wird, bis er eine ebene Fläche darstellt Im Brennpunkt, beim Beobachter, würde sich nichts ändern, wenn die in der flachen Anordnung gegenüber dem Hohlspiegel nach den Rändern hin immer länger werdenden Entfernungen zum Beobachtungspunkt theoretisch durch eine proportional erhöhte Lichtgeschwindigkeit oder Geschwindigkeit der Leitungselektronen ausgeglichen würden, so daß die jeweils auf der Spiegeloberfläche auffallenden Lichtquanten zu jedem Zeitpunkt alle gleichzeitig beim Beobachter landen. Das ist natürlich physikalisch nicht möglich, da die Lichtgeschwindigkeit im gleichen Medium nicht veränderbar ist Bei der erfindungsgemäßen Anordnung in der Abbildung II läßt sich dies jedoch durch die verschieden langen elektrischen Zuleitungen oder Glasfasern erreichen.

Natürlich ergibt das erfindungsgemäße Verfahren ein aus vielen Punkten zusammengesetztes Bild, dessen Qualität durch steigende Dichte der Pixel erhöht werden kann. Die Großgeräte der Astronomie arbeiten auch mit zahlreichen aneinandergesetzten Einzelspiegeln; und in der Photographie mit heute 16 Megapixeln und mehr, wie vor allem auch beim Fernsehen, steigt bei gleichzeitig sinkenden Kosten die Pixelzahl immer weiter.

Ein besonders zweckmäßiges erfindungsgemäßes Verfahren besteht darin, die Verbindungen zwischen den lichtempfindlichen Substanzen (Pixeln) und dem Beobachtungspunkt B durch sogenannte gedruckte Schaltungen herzustellen, wie sie z.B. bei der Herstellung von Chips üblich sind. Diese übertragen die durch das Licht ausgelösten Impulse dann auf eine geeignete Bildoberfläche.

## Patentansprüche

1. Geräte und Anwendungen zur (vergrößernden) Beobachtung von terrestrischen und astronomischen Vorgängen und Bildern, **dadurch gekennzeichnet daß** statt der Linsen- bzw. Spiegeloptik verschiedene flächig angeordnete Pixel verwendet werden, bei denen die Bilder durch entsprechende Anordnung und Länge der elektrischen, optischen oder sonstigen Verbindungen zwischen Pixeln und Brennpunkt erzeugt werden, die den optischen Weg der Lichtstrahlen in Linsen- und Spiegelfernrohren, Photoapparaten und sonstigen optischen Geräten simulieren.

2. Geräte und Anwendungen nach Anspruch 1., wobei die Pixel in einer ebenen oder sonstwie von der Hohlspiegelform abweichende Fläche angeordnet werden und bei denen die angepaßten Leitungen zum Beobachtungspunkt bzw, der Beobachtungsfläche außerhalb des Raums zwischen Objekt und Pixelfläche geführt werden, so daß sie nicht im Gesichtsfeld des Beobachtungspunktes stören.

3. Geräte und Anwendungen nach Anspruch 1. und 2., wobei statt der Pixel, wie sie in der Digitalphotographie und im Fernsehen verwendet werden, andere optisch oder elektrisch empfindliche Sensoren eingesetzt werden, von denen die optischen oder elektrischen Signale zum Beobachtungspunkt geführt werden, wobei das dort entstehende Bild durch die variierte Länge der Zuleitungen erzeugt wird.

4. Vorrichtungen und Verfahren nach Anspruch 1. bis 3. **dadurch gekennzeichnet, daß** anstelle der z.B. in der Digitalphotographie verwendete Pixel andere lichtempfindliche Sensoren verwendet werden, von denen die Bildinförmation in gleicher Weise weitergeleitet und dargestellt werden kann.

5. Vorrichtungen und Verfahren nach Anspruch 1. bis 4., **dadurch gekennzeichnet daß** die Verbindungen zwischen den lichtempfindlichen Substanzen (Pixeln) und dem Beobachtungspunkt durch gedruckte Schaltungen hergestellt werden.

6. Vorrichtungen und Verfahren nach Anspruch 1. bis 5., **dadurch gekennzeichnet daß** die durch gedruckte Schaltungen oder auf anderem Wege übertragenen Impulse ihrerseits mithilfe von Pixeln oder anderen Sensoren das zu übertragende Bild darstellen.
